(19) Europäisches Patentamt
European Patent Office
Office européen des brevets

(11) **EP 2 243 181 B1**

(12) **EUROPEAN PATENT SPECIFICATION**

(45) Date of publication and mention
of the grant of the patent:
**06.05.2015 Bulletin 2015/19**

(51) Int Cl.:
*H01M 4/58* (2010.01)   *H01M 4/48* (2010.01)
*H01M 4/36* (2006.01)   *H01M 4/136* (2010.01)
*H01M 4/02* (2006.01)   *H01M 4/525* (2010.01)
*H01M 4/131* (2010.01)

(21) Application number: **08715327.6**

(22) Date of filing: **26.03.2008**

(86) International application number:
**PCT/CN2008/070591**

(87) International publication number:
**WO 2009/117869 (01.10.2009 Gazette 2009/40)**

(54) **CATHODE MATERIALS FOR LITHIUM BATTERIES**

KATHODENMATERIALIEN FÜR LITHIUMBATTERIEN

MATÉRIAUX DE CATHODE POUR BATTERIES AU LITHIUM

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**27.10.2010 Bulletin 2010/43**

(73) Proprietor: **Byd Company Limited
Shenzhen, Guangdong 518118 (CN)**

(72) Inventors:
 • **SHEN, Xi
   Shenzhen
   Guangdong Province 518118 (CN)**
 • **PAN, Fuzhong
   Shenzhen
   Guangdong Province 518118 (CN)**
 • **WAN, Caimin
   Shenzhen
   Guangdong Province 518118 (CN)**
 • **YOU, Shengping
   Shenzhen
   Guangdong Province 518118 (CN)**

(74) Representative: **Hoffmann Eitle
Patent- und Rechtsanwälte PartmbB
Arabellastraße 30
81925 München (DE)**

(56) References cited:
**CN-A- 1 320 976        CN-A- 1 855 588
CN-A- 1 992 397        JP-A- 2004 047 180
US-A1- 2004 029 011    US-A1- 2004 096 743
US-A1- 2004 253 518    US-A1- 2006 222 946
US-A1- 2007 003 829**

**Description**

FIELD OF THE INVENTION

The embodiments of the present invention relate to batteries, more specifically, to a cathode material for lithium batteries.

BACKGROUND

Lithium batteries are widely used and can be found in laptop computers, cameras, camcorders, PDAs, cell phones, iPods and other portable electronic devices. These batteries are also growing in popularity for defense, automotive and aerospace applications because of their high energy density.

Lithium phosphate-based cathode materials for batteries have long been known in the industry. People have used metal intercalation compound to improve the electrical property of lithium phosphate. One popular intercalation compound is lithium iron phosphate ($LiFePO_4$). Because of its non-toxicity, thermal stability, safety characteristics and good electrochemical performance, there is a growing demand for rechargeable lithium secondary batteries with $LiFePO_4$ as the cathode material.

US 2004/0029011 *discloses a cathode composition containing at least one mixed oxide spinal or lamellar structure having the general formula $Li_{1-x}M_{1-x}A_aO_{2-f}F_f$ and at least one mixed phosphate of the general formula $Li_{1-z}Fe_n0Mn_mPO_4$, wherein M = Co, Ni, Mn; A = Mg, Zn, Al, Fe, Cr, Co, Mn, Ni, Zn, Ga; $0 \leq x, y, a, f \leq 1$; $0 < z, n, m \leq 1$.*

US 2004/0096743 *discloses a positive active material comprising (1) one or more particles of lithium nickelate having a surface and having a formula $Li_yNi_{1-z}M'_zO_2$, where $0.05 \leq y \leq 1.2$ and $0 \leq z \leq 0.5$, and M' is selected from the group consisting of Fe, Co, Mn, Cu, Zn, Al, Sn, B, Ga, Cr, V, Ti, Mg, Ca, Sr and mixtures thereof; and (2) an olivine compound having an olivine-type crystal structure and having a formula $Li_xMPO_4$ where $0.05 \leq x \leq 1.2$, and M is selected from a group consisting of Fe, Mn, Co, Ni, Cu, Zn, Mg and mixtures thereof;*

EP 1 150 368 A2 *discloses a positive electrode wherein a layer of a positive electrode active material is formed on a positive electrode current collector; and wherein said layer of the positive electrode active material contains, as a positive electrode active material, a composite product of a first lithium compound represented by the general formula $Li_xM_yPO_4$, where $0<x<2$, $0.8<y<1.2$ and M contains Fe, and a second lithium compound such as $LiCoO_2$, $LiNiO_2$ or $LiMn_2O_4$.*

CN 1992397 A *discloses cathode material for lithium batteries comprising a first active component comprising a lithium transition metal oxide having the general formula $LiNi_{1/3}Mn_{1/3}Co_{1/3}O_2$ or $Li_{1+x}Ni_{1-y-z-w}Mn_yCo_zL_wO_2$ wherein $-0.1 \leq x \leq 0.2$, $0.05<y<0.9$, $0.05<z<0.9$, $0<w<0.2$, $0.1<y+z<1.0$; wherein L includes one or more members of boron, magnesium, aluminium, titanium, chromium, iron, zirconium, copper, zinc, gallium, yttrium, fluorine, iodine and sulphur; a binder component; and a second active component, wherein the second active component is formed in that one or more salt(s) of lithium metal phosphate encapsulate(s) one or more lithium transition metal oxide(s).*

The present invention teaches a better cathode material using lithium metal phosphate salts and other metal intercalation compounds. The prior art materials can result in batteries with poor coating quality that are vulnerable to electrolytic reactions. These reactions can cause poor electrical and thermal properties in the batteries, especially when such requirements are necessary for batteries used in electric vehicles.

As such, there is a need for a better cathode material for lithium batteries with enhanced electrical and thermal performance.

SUMMARY

*The present invention relates to a cathode material for lithium batteries comprising:*

*a first active component comprising one or more salts of lithium metal phosphate having the general formula $Li_{1+X}M_YPO_4$, wherein:*

*$-0.1 \leq X \leq 0.2$, $0.9 \leq Y \leq 1.1$; and*
*M includes one or more members of iron, titanium, cobalt, chromium, nickel, vanadium and manganese;*

*a binder component; and*

*a second active component, wherein the second active component is formed in that one or more salt(s) of lithium metal phosphate encapsulate(s) one or more lithium transition metal oxide (s).*

*Preferably,* the lithium metal phosphate salt has an average particle size of about 1 to 10 microns.

The second compound includes one or more members of lithium transition metal oxide, wherein the lithium transition metal oxide *preferably* has the general formula $Li_{1+x}Ni_{1-y-z}Mn_YCo_ZM_PO_2$, wherein: $-0.1 \leq X \leq 0.2$, $0 \leq Y \leq 1$, $0 \leq Z \leq 1$, $0 \leq Y+Z \leq 1.0$, $0 \leq P \leq 0.2$; and M includes one or more members of boron, magnesium, aluminum, titanium, chromium, iron, zirconium, copper, zinc, gallium, yttrium, fluorine, iodine, sulfur and other elements. In another embodiment, the lithium transition metal oxide has the general formula $Li_{1+X}Mn_YM_{2-Y}O_4$, wherein: $-0.1 \leq X \leq 0.2$, $1.7 \leq Y \leq 2.0$; and M includes one or more members of boron, magnesium, aluminum, titanium, chromium, iron, cobalt, zirconium, nickel, copper, zinc, gallium, yttrium, fluorine, iodine, *and* sulfur. The second active component *is* formed when one or more salts of lithium metal phosphate encapsulate one or more lithium transition metal oxide. In one embodiment, the second active component has an average particle size of about 5-14 microns. The weight ratio of the first active component to the second active component can vary between about 9.5 : 0.5 to 0.5 : 9.5. In certain examples, the first and second compounds include one or more members selected from the group including $LiFePO_4$, $LiCoO_2$ and $LiMn_2O_4$.

The binder component is *preferably* about 0.01-8 % of the total weight of the cathode material, wherein the binder component includes one or more members of polyvinylidene fluoride (PVDF), polytetrafluoroethylene (PTFE) and styrene-butadiene rubber (SBR). In another embodiment, the cathode material further includes at least one conductive additive, wherein the conductive additive is *preferably* about 2-20 % of the total weight of the cathode material. The conductive additive *preferably* includes one or more members of graphite, carbon fiber, carbon black, metal powders and fibers. The cathode material can be incorporated in a battery having the cathode material, an anode and an electrolyte.

Other variations, embodiments and features of the present invention will become evident from the following detailed description, and claims.

DETAILED DESCRIPTION

The present invention provides new compositions of cathode materials for lithium batteries. The invention utilizes at least two active components and a binder component in a way to significantly improve the electrical and thermal properties of the cathode material. In other instances, a conductive additive may be provided to the composition. The cathode material produced by the present invention exhibits superior particle homogeneity and high electrical capacity especially during high electrical discharges. Furthermore, the cathode material also exhibit superior thermal properties. Such cathode materials are better suited for applications including without limitations electric vehicles and notebook computers.

Accordingly, a first embodiment of the present invention calls for a cathode material for lithium secondary batteries, wherein the cathode material includes at least one cathode active material and at least one binder component. In other embodiments, at least a conductive additive may be incorporated. The cathode active material includes compound A and compound B, wherein compound A includes olivine-structured lithium metal phosphate salts and can take on the chemical formula (1), while compound B includes materials of compound A subjected to a first type of lithium transition metal oxide C as shown in chemical formula (2) or a second type of lithium transition metal oxide D as shown in chemical formula (3). In some examples, the lithium transition metal oxides C and D can be encapsulated or surrounded by the lithium metal phosphate salts.

$$Li_{1+X}M_YPO_4 \qquad (1),$$

wherein:

$-0.1 \leq X \leq 0.2$, $0.9 \leq Y \leq 1.1$, and M includes one or more members of calcium, iron, aluminum, titanium, cobalt, boron, chromium, nickel, magnesium, zirconium, gallium, vanadium, manganese, zinc and other elements.

$$Li_{1+X}Ni_{1-Y-Z}Mn_YCo_ZM_PO_2 \qquad (2),$$

wherein:

$-0.1 \leq X \leq 0.2$, $0 \leq Y \leq 1$, $0 \leq Z \leq 1$, $0 \leq Y+Z \leq 1.0$, $0 \leq P \leq 0.2$, and M includes one or more members of boron, magnesium, aluminum, titanium, chromium, iron, zirconium, copper, zinc, gallium, yttrium, fluorine, iodine, sulfur and other elements.

$$Li_{1+X}Mn_YM_{2-Y}O_4 \qquad (3),$$

wherein:

-0.1≤X≤0.2, 1.7≤Y≤2.0, and M includes one or more members of boron, magnesium, aluminum, titanium, chromium, iron, cobalt, zirconium, nickel, copper, zinc, gallium, yttrium, fluorine, iodine, sulfur and other elements.

In this embodiment, compound A has an average particle size of about 1-10 microns while compound B has an average particle size of about 5-14 microns. In certain examples, the weight ratio of compound A to compound B can vary between about 9.5 : 0.5 to 0.5 : 9.5. The amount of conductive additive that can be added to the cathode material is about 2-20 % of the total weight of the cathode active material, while the amount of binder component that can be added to the cathode material is about 0.01-8 % of the total weight of the cathode active material.

In one specific embodiment based on the chemical formulas above, compound A can be $LiFePO_4$, lithium transition metal oxide C can be $LiCoO_2$, while lithium transition metal oxide D can be $LiMn_2O_4$. The resulting compound B, having compound A subjected to lithium transition metal oxide C or lithium transition metal oxide D, has a weight of about 0.0001 to 0.1. In one instance, the lithium metal phosphate salt can be purchase from a third party vendor or supplier. In the alternative, the lithium metal phosphate salt can also be manufactured from known methods of preparation.

The method of manufacturing compound B includes hydrothermal processing, sol-gel processing, precipitation method, oxidation-reduction liquid coating method, and the coating material method for manufacturing lithium transition metal oxides C or D. The types of coating material include slurries of lithium salts, phosphate salts and ferrous salts. The lithium salt includes one or more members of lithium phosphate, lithium carbonate, lithium hydroxide, lithium oxalate and lithium acetate. The phosphate salt includes one or more members of ammonium, diammonium phosphate (DAP), ammonium phosphate and lithium phosphate. The ferrous salt includes one or more members of ferrous oxalate, ferrous acetate, ferrous chloride, ferrous sulfate, iron sulfate and hydrated iron sulfate.

The method of preparing compound B includes mixing the coating material with lithium transition metal oxides C or D in water or one or more organic solvents and mixtures thereof. In the alternative, the coating material can be mixed in water or organic solvent to provide a coating precursor, which can subsequently be mixed with the lithium transition metal oxides C or D. Solvent evaporation can be carried out at between 300 to 900 °C for 1 to 24 hours and cooled at ambient to procure the desired compound B.

In these embodiments, subjecting compound A to lithium transition metal oxides C or D provides compound B with enhanced electrical conductivity and effectively raises the electrical conductivity of the cathode material leading to higher capacity and better charge / discharge performance.

Compound B, having compound A coupled with lithium transition metal oxide C or lithium transition metal oxide D, is not likely to dissociate and undergo compositional or structural changes when subjected to charge / discharge cycles. The compound also has good thermal stability and can minimize the amount of direct contact between the lithium transition metal oxides C or D and the electrolyte allowing the battery to deliver enhanced charge / discharge cycle performance as well as safety performance.

The conductive additive for the cathode material can include one or more members of graphite, carbon fiber, carbon black, metal powders and fibers. In the alternative, other types of conductive additives known by one skilled in the art can be incorporated. The addition of the conductive additive can improve the electrical conductivity of the cathode material. In addition, the conductive additive can mitigate the amount of volumetric expansion exhibited in the cathode material. Namely, when lithium iron phosphate is mixed with compound B, the cathode active material can expand and contract with the lithium. But because of the interaction between the conductive additive and the cathode active material during performance testing, the addition of the conductive additive can lead to the battery having increased cycling performance and high temperature storage capability.

The binder additive for the cathode material can include one or more members of polyvinylidene fluoride (PVDF), polytetrafluoroethylene (PTFE) and styrene-butadiene rubber (SBR). It is understood that other binder additives may be utilized.

The presently disclosed embodiments can provide a lithium secondary battery having a battery shell, positive and negative electrodes and associated electrolyte, wherein the electrodes and electrolyte are sealed within the battery shell. The electrodes include rolled or stacked positive and negative films along with the dividing membrane, wherein the positive film incorporates at least a conductive current collector and a cathode active material. It is understood that various conductive current collector can be utilized including without limitation aluminum foil, copper foil and pierced coils. Further, the positive film can be fabricated using methods known in the art. For example, the cathode active material, binder and conductive additives can be dissolved in a suitable solvent to provide a slurry mixture and subsequently applied onto a conductive substrate, dried, rolled and cut into suitable die form.

In the methods disclosed above, the cathode active material, conductive additive, and binder additive can be mixed in one or more solvents known by one skilled in the art including without limitation N-methylpyrrolidone (NMP), dimethylformamide (DMF), diethylformamide (DEF), dimethyl sulfoxide (DMSO), tetrahydrofuran (THF), water and alcohol. It is understood that other solvents may be utilized. The amount of solvent should be sufficient to generate a slurry material for coating on the conductive current collector. In one example, the amount of solvent for the slurry is about 40-90 % by weight of the cathode active material.

Various methods of drying, rolling and die cutting of the cathode material can be carried out using techniques generally known by those skilled in the art. In one instance, the cathode films can be dried at a temperature of about 60-120 °C for 0.5-5 hours. Other drying temperatures and times can also be utilized.

The electrodes composition for the lithium secondary battery can utilize those known by one skilled in the art. For example, the system and method of winding, stacking and positioning the positive and negative films along with the dividing membrane can be accomplished as appreciated by one skilled in the art.

The anode material can utilize any material understood by one skilled in the art. In one embodiment, the anode material can include at least one anode active material, binder additive and a conductive additive. In other embodiments, an electrode-containing fluid can be coated on the anode active material. The anode active material can incorporate various types of active material known in the art including without limitation carbon materials. The carbon materials can include graphite carbon, graphite and other acetylene polymeric materials oxidized at high temperatures to provide the carbon component. Other carbon materials including pyrolytic carbon, coke, sintered organic polymer and activated carbon can be incorporated. In other instances, organic polymers sintered by phenolic resin, epoxy resin or having sintered by carbonization may also be contemplated.

The binder additive can utilize any material understood by one skilled in the art. In one example, the binder additive includes hydrophobic and hydrophilic binder mixtures, wherein various ratios of hydrophobic and hydrophilic component can be incorporated without limitation. In certain examples, the hydrophilic binder component to the hydrophobic binder component has a weight ratio varying between about 0.3 : 1 to 1 : 1. The binder additive can come in a solid form, an emulsified form or as an aqueous solution. The coating and viscosity of the binder additive to be applied can be operationally and functionally adjusted as necessary. In one embodiment, the hydrophilic binder solution has a concentration of 0.5-4 % by weight while the hydrophobic binder solution has a concentration of 10-80 % by weight. The hydrophobic binder component can include one or more members of polytetrafluoroethylene (PTFE), styrene-butadiene rubber (SBR) or mixtures thereof, while the hydrophilic binder component can include one or more members of hydroxypropyl methyl cellulose (HPMC), sodium carboxymethyl cellulose (CMC), polyvinyl alcohol (PAC) or hydroxyethyl cellulose (HEC).

The anode material can also include one or more members of a plurality of conductive additives without any restriction. For example, the anode conductive additive can include one or more members of conductive carbon black, nickel powder and copper powder. Using the weight of the anode active material as a standard, the amount of conductive additive that can be added to the anode active material is about 0.1-12 % by weight of the active material. It will be appreciated by one skilled in the art that other types of conductive additives and anode active materials can be incorporated.

The anode material can be prepared through a variety of means as can be understood by one skilled in the art including using the proper amount and type of solvents for dissolving the anode active material, binder and conductive additives to form the slurry mixture. The coating and viscosity of the slurry mixture to be applied can be operationally and functionally adjusted as necessary. Subsequently, the anode material slurry mixture can be applied on the anode current collector, compressed and dried into an anode film and cut into the proper die for testing purposes. In one instance, the drying temperature is about 120 °C for a period of 5 hours. It will be appreciated by one skilled in the art that other amounts of solvent for providing the proper viscosity and mobility or for coating on the current collectors as well as the drying and die forming methods and conditions can be utilized. Likewise, the types of solvent can include water, water-soluble solvents, and water-soluble solvents having 1 to 6 carbons including alcohols, acetone, N,N-dimethylformamide and mixtures thereof.

A dividing membrane having enhanced electric insulation properties and the ability to maintain liquidity can be provided between the cathode and anode materials. The dividing membrane should also be capable of being received within the battery core and not be susceptible to the non-aqueous electrolyte. As such, the dividing membrane can take on one or more members of polyolefin micro-porous membrane, polyethylene vinyl film, fiberglass or ultrafine glass fiber paper. It is understood that other types of dividing membrane can be incorporated and that their location and nature can be appreciated by one skilled in the art.

The electrolyte for the presently disclosed embodiments can be non-aqueous, wherein the non-aqueous electrolyte mixture can be provided by dissolving electrolytic lithium salts in a non-aqueous solvent or solution. For example, the non-aqueous electrolytic salt can include one or more members of lithium hexafluorophosphate ($LiPF_6$), lithium perchlorate ($LiClO_4$), lithium tetrafluoroborate ($LiBF_4$), lithium hexafluoroarsenate ($LiAsF_6$), lithium silicate hexafluoride ($LiSiF_6$), lithium tetraphenylborate ($LiB(C_6H_5)_4$), lithium chloride (LiCl), lithium bromide (LiBr), lithium aluminum chloride ($LiAlCl_4$), $LiC(SO_2CF_3)_3$, $LiCH_3SO_3$, $LiN(SO_2CF_3)_2$ and lithium halide. The non-aqueous solvents can include organic solvents having chain ester and ring ester mixtures including dimethyl carbonate (DMC), diethyl carbonate (DEC), ethyl methyl carbonate (EMC), methyl propyl carbonate (MPC), dipropyl carbonate (DPC) and mixtures thereof can also be incorporated. In addition, other organic ester chains having fluorine, sulfur or unsaturated bonds, cyclic esters including ethylene carbonate (EC), propylene carbonate (PC), vinylene carbonate (VC), $\gamma$-butyrolactone ($\gamma$-BL), methyl lactone and other organic ester rings having fluorine, sulfur or unsaturated bonds may also be contemplated. The quantity of electrolyte to inject into the battery generally has a concentration of 0.1-2.0 mole / liter, although other amounts and concentrations can be incorporated. It is understood that other non-aqueous electrolytes and solvents can be incorporate as appreciated by one skilled in the art.

It will be further appreciated that the presently disclosed lithium secondary batteries including methods of preparing same can utilize any techniques as known by one skilled in the art. For example, techniques of preparing the battery including winding the material into the battery core, injecting the electrolyte solvent, and sealing the electrolyte within the battery core, can all incorporate other techniques known in the industry.

The following are examples of cathode materials having at least one cathode active material, one conductive additive, and one binder additive.

EXAMPLE A1

Dissolve $FeSO_4$ (weight of Fe is 0.1 weight % of $LiCoO_2$) : $H_3PO_4$ : LiOH having molar ratio of 1 : 1 : 3 in water, add $LiCoO_2$ powder, mix uniformly and evaporate the solvent. Heat the mixture at a temperature of 700 °C for 6 hours and then cool to provide $LiCoO_2$ / $LiFePO_4$ coated materials with an average particle size of 10 microns.

Add $LiFePO_4$ : ($LiCoO_2$ / $LiFePO_4$) : (graphite + carbon black) : PVDF having weight ratio of 70 : 30 : (6 + 3) : 5 in a solvent formed by dissolving polyvinylidene fluoride (PVDF) in N-methylpyrrolidone (NMP) at a ratio of 1 : 10, mix uniformly to provide $LiFePO_4$ with an average particle size of 5 microns and $LiCoO_2$ / $LiFePO_4$ coated material with an average particle size of 10 microns. Apply an even coating of the slurry on a 20 micron thick aluminum foil, dry at 120 °C, cut and roll to a 450 x 42 x 170 mm$^3$ cathode film with about 5.0 grams of the material as the cathode active ingredient.

EXAMPLE A2

Dissolve $FeSO_4$ (weight of Fe is 0.1 weight % of $LiCoO_2$) : $H_3PO_4$ : LiOH having molar ratio of 1 : 1 : 3 in water, add $LiCoO_2$ powder, mix uniformly and evaporate the solvent. Heat the mixture at a temperature of 700 °C for 6 hours and then cool to provide $LiCoO_2$ / $LiFePO_4$ coated materials with an average particle size of 13 microns.

Add $LiFePO_4$ : ($LiCoO_2$ / $LiFePO_4$) : (graphite + carbon black) : PVDF having weight ratio of 90 : 10 : (6 + 3) : 5 in a solvent formed by dissolving polyvinylidene fluoride (PVDF) in N-methylpyrrolidone (NMP) at a ratio of 1 : 10, mix uniformly to provide $LiFePO_4$ with an average particle size of 9 microns and $LiCoO_2$ / $LiFePO_4$ coated material with an average particle size of 13 microns. Apply an even coating of the slurry on a 20 micron thick aluminum foil, dry at 120 °C, cut and roll to a 450 x 42 x 170 mm$^3$ cathode film with about 5.0 grams of the material as the cathode active ingredient.

EXAMPLE A3

Dissolve $FeSO_4$ (weight of Fe is 0.1 weight % of $LiCoO_2$) : $H_3PO_4$ : LiOH having molar ratio of 1 : 1 : 3 in water, add $LiMn_2O_4$ powder, mix uniformly and evaporate the solvent. Heat the mixture at a temperature of 700 °C for 6 hours and then cool to provide $LiMn_2O_4$ / $LiFePO_4$ coated materials with an average particle size of 10 microns.

Add $LiFePO_4$ : ($LiMn_2O_4$ / $LiFePO_4$) : (graphite + carbon black) : PVDF having weight ratio of 70 : 30 : (6 + 3) : 5 in a solvent formed by dissolving polyvinylidene fluoride (PVDF) in N-methylpyrrolidone (NMP) at a ratio of 1 : 10, mix uniformly to provide $LiFePO_4$ with an average particle size of 2 microns and $LiMn_2O_4$ / $LiFePO_4$ coated material with an average particle size of 6 microns. Apply an even coating of the slurry on a 20 micron thick aluminum foil, dry at 120 °C, cut and roll to a 450 x 42 x 170 mm$^3$ cathode film with about 5.0 grams of the material as the cathode active ingredient.

EXAMPLE A4

Dissolve $FeSO_4$ (weight of Fe is 0.1 weight % of $LiCoO_2$) : $H_3PO_4$ : LiOH having molar ratio of 1 : 1 : 3 in water, add $LiCoO_2$ powder, mix uniformly and evaporate the solvent. Heat the mixture at a temperature of 700 °C for 6 hours and then cool to provide $LiCoO_2$ / $LiFePO_4$ coated materials.

Add $LiFePO_4$ : ($LiCoO_2$ / $LiFePO_4$) : (graphite + metal powder) : PVDF having weight ratio of 70 : 30 : (2 + 1) : 5 in a solvent formed by dissolving polyvinylidene fluoride (PVDF) in N-methylpyrrolidone (NMP) at a ratio of 1 : 10, mix uniformly to provide the cathode materials. Apply an even coating of the slurry on a 20 micron thick aluminum foil, dry at 120 °C, cut and roll to a 450 x 42 x 170 mm$^3$ cathode film with about 5.0 grams of the material as the cathode active ingredient.

EXAMPLE A5

Dissolve $FeSO_4$ (weight of Fe is 0.1 weight % of $LiCoO_2$) : $H_3PO_4$ : LiOH having molar ratio of 1 : 1 : 3 in water, add $LiCoO_2$ powder, mix uniformly and evaporate the solvent. Heat the mixture at a temperature of 700 °C for 6 hours and then cool to provide $LiCoO_2$ / $LiFePO_4$ coated materials.
Add $LiFePO_4$ : ($LiCoO_2$ / $LiFePO_4$) : (carbon black + carbon fiber) : PVDF having weight ratio of 30 : 70 : (6 + 3) : 5 in a solvent formed by dissolving polyvinylidene fluoride (PVDF) in N-methylpyrrolidone (NMP) at a ratio of 1 : 10, mix uniformly to provide the cathode materials. Apply an even coating of the slurry on a 20 micron thick aluminum foil, dry at 120 °C, cut and roll to a 450 x 42 x 170 mm$^3$ cathode film with about 5.0 grams of the material as the cathode active ingredient.

EXAMPLE A6

Dissolve $FeSO_4$ (weight of Fe is 0.1 weight % of $LiCoO_2$) : $H_3PO_4$ : LiOH having molar ratio of 1 : 1 : 3 in water, add $LiCoO_2$ powder, mix uniformly and evaporate the solvent. Heat the mixture at a temperature of 700 °C for 6 hours and then cool to provide $LiCoO_2$ / $LiFePO_4$ coated materials.
Add $LiFePO_4$ : ($LiCoO_2$ / $LiFePO_4$) : (carbon black + carbon fiber) : PVDF having weight ratio of 70 : 30 : (7 + 5) : 5 in a solvent formed by dissolving polyvinylidene fluoride (PVDF) in N-methylpyrrolidone (NMP) at a ratio of 1 : 10, mix uniformly to provide the cathode materials. Apply an even coating of the slurry on a 20 micron thick aluminum foil, dry at 120 °C, cut and roll to a 450 x 42 x 170 mm$^3$ cathode film with about 5.0 grams of the material as the cathode active ingredient.

EXAMPLE A7

Dissolve $FeSO_4$ (weight of Fe is 0.1 weight % of $LiCoO_2$) : $H_3PO_4$ : LiOH having molar ratio of 1 : 1 : 3 in water, add $LiCoO_2$ powder, mix uniformly and evaporate the solvent. Heat the mixture at a temperature of 700 °C for 6 hours and then cool to provide $LiCoO_2$ / $LiFePO_4$ coated materials.
Add $LiFePO_4$ : ($LiCoO_2$ / $LiFePO_4$) : (graphite + carbon black) : PVDF having weight ratio of 70 : 30 : (1 + 4) : 5 in a solvent formed by dissolving polyvinylidene fluoride (PVDF) in N-methylpyrrolidone (NMP) at a ratio of 1 : 10, mix uniformly to provide the cathode materials. Apply an even coating of the slurry on a 20 micron thick aluminum foil, dry at 120 °C, cut and roll to a 450 x 42 x 170 mm$^3$ cathode film with about 5.0 grams of the material as the cathode active ingredient.

EXAMPLE A8

Dissolve $FeSO_4$ (weight of Fe is 0.1 weight % of $LiCoO_2$) : $H_3PO_4$ : LiOH having molar ratio of 1 : 1 : 3 in water, add $LiCoO_2$ powder, mix uniformly and evaporate the solvent. Heat the mixture at a temperature of 700 °C for 6 hours and then cool to provide $LiCoO_2$ / $LiFePO_4$ coated materials.
Add $LiFePO_4$ : ($LiCoO_2$ / $LiFePO_4$) : (graphite + carbon black) : PVDF having weight ratio of 60 : 40 : (1.5 + 1) : 5 in a solvent formed by dissolving polyvinylidene fluoride (PVDF) in N-methylpyrrolidone (NMP) at a ratio of 1 : 10, mix uniformly to provide the cathode materials. Apply an even coating of the slurry on a 20 micron thick aluminum foil, dry at 120 °C, cut and roll to a 450 x 42 x 170 mm$^3$ cathode film with about 5.0 grams of the material as the cathode active ingredient.

REFERENCE A9

Add $LiFePO_4$ : graphite : PVDF having weight ratio of 100 : 9 : 5 in a solvent formed by dissolving polyvinylidene fluoride (PVDF) in N-methylpyrrolidone (NMP) at a ratio of 1 : 10, mix uniformly to provide a $LiFePO_4$ coated material. Apply an even coating of the slurry on a 20 micron thick aluminum foil, dry at 120 °C, cut and roll to a 450 x 42 x 170 mm$^3$ cathode film with about 5.0 grams of the material as the cathode active ingredient.

TESTING OF EXAMPLES A1-A8 and REFERENCE A9

(1) Battery preparation

(a) Preparation of cathode material

The cathode materials are prepared as shown above.

(b) Preparation of anode material

Dissolve polyvinylidene fluoride (PVDF) in N-methylpyrrolidone (NMP) at a ratio of 1 : 10. Add artificial graphite into the solution and thoroughly mix to provide an anode material having a ratio of 100 : 5 of artificial graphite : PVDF. Apply an even coating on a 20 micron thick copper foil, dry at 120 °C, cut and roll to a 470 x 45 x 120 mm$^3$ anode film to provide about 2.5 grams of artificial graphite.

(c) Battery assembly

Separately wind each of the cathode and anode active materials with 25 micron thick polypropylene film into a lithium secondary battery core, followed by dissolving 1M LiPF$_6$ in a mixture of non-aqueous electrolyte solvent ethylene carbonate / dimethyl carbonate (EC / DMC) having a ratio of 1 : 1, inject and seal the electrolyte within the battery core to provide a 5 x 34 x 50 mm$^3$ lithium ion battery having a capacity of 720 mAh.

(2) Battery capacity testing

Charge each of the batteries A1-A9 at 1C mA current charge to 3.8 volts. Upon reaching 3.8 volts, charge at constant voltage with a limit of 0.05C mA current charge and set aside for 5 minutes. Discharge at 1C mA current charge to 2.0 volts and set aside for 5 minutes. The battery capacities of discharging at 1C mA current charge to 2.0 volts are shown in Table 1.

(3) High temperature performance cycle testing

At 60 °C, charge each of the batteries A1-A9 at 1C mA current charge to 3.8 volts. Upon reaching 3.8 volts, charge at constant voltage with a limit of 0.05C mA current charge and set aside for 5 minutes. Discharge at 1C mA current charge to 2.0 volts and set aside for 5 minutes. Repeat the steps above at least 300 times. After 300 cycles, record the battery capacity of discharging at 1C mA current charge to 2.0 volts. Table 1 illustrates the battery capacity maintenance rate, which can be determined by comparing the capacity at the end of the multiple cycles versus the initial cycle.

Table 1. Capacity testing of batteries A1-A9.

| Sample number | Battery capacity (mAh) | Battery capacity maintenance rate (%) |
| --- | --- | --- |
| A1 | 738 | 88.6 |
| A2 | 718 | 89.5 |
| A3 | 722 | 86.4 |
| A4 | 729 | 88.7 |
| A5 | 750 | 86.4 |
| A6 | 732 | 90.2 |
| A7 | 750 | 89.6 |
| A8 | 690 | 80.1 |
| A9 | 620 | 74.0 |

From the results in Table 1, examples A1-A8 exhibited higher battery capacity and higher capacity maintenance rates than reference A9 by between 70-130 mAh and 6.1-16.2 %, respectively. Accordingly, the cathode materials and methods of manufacturing same according to the presently disclosed embodiments can provide lithium secondary batteries with enhanced capacity and associated maintenance rate.

(4) High temperature storage performance testing

At room temperature, charge each of the batteries A1-A9 at 1C mA current charge to 3.8 volts. Upon reaching 3.8 volts, charge at constant voltage with a limit of 0.05C mA current charge and set aside for 5 minutes. Accurately determine each battery's thickness and place each battery in storage for a week at 60 °C. Afterwards, determine each battery's capacity by discharging at 1C mA current charge to 2.0 volts and repeat the thickness measurement. Table 5 illustrates each battery's capacity maintenance rate and thickness variations as calculated using initial and subsequent values.

(5) Large current discharge performance testing

At room temperature, charge each of the batteries A1-A9 at 1C mA current charge to 3.8 volts. Upon reaching 3.8 volts, charge at constant voltage with a limit of 0.05C mA current charge and set aside for 5 minutes. Discharge at 0.2C mA current charge to 2.0 volts and set aside for 5 minutes. Record the battery capacities of discharging at 0.2C mA current charge to 2.0 volts. Repeat the steps above at 3C mA and 5C mA. Record the battery capacities of discharging at 3C mA current charge to 2.0 volts and at 5C mA current charge to 2.0 volts. The battery discharge capacity ratios at different current charges are shown in Table 5.

(6) Safety performance testing

At room temperature, charge each of the batteries A1-A9 at 1C mA current charge to 3.8 volts. Upon reaching 3.8 volts, charge at constant voltage with a limit of 0.05C mA current charge and set aside for 5 minutes. Place all batteries into a furnace at 160 °C for 1 hour and make observations of the batteries during that time. If no changes were detected, it was noted as such. In the alternative, if the explosion-proof opening is breached, the time to failure was noted as such. Additionally, the maximum surface temperature of each battery was measured and recorded. The results of the 1 hour furnace test and maximum surface temperature are shown in Table 2.

Table 2. Maintenance rate and thickness variations of batteries A1-A9.

| Sample number | Capacity maintenance rate (%) | Thickness variation (mm) | 3C / 0.2C discharge rate (%) | 5C / 0.2C discharge rate (%) | 1 hour furnace heat test | Maximum surface temp (°C) |
|---|---|---|---|---|---|---|
| A1 | 95.2 | 0.04 | 97.5 | 93.5 | No change | 165 |
| A2 | 95.2 | 0.04 | 90.1 | 86.7 | No change | 163 |
| A3 | 88.3 | 0.10 | 98.0 | 84.2 | No change | 162 |
| A4 | 94.4 | 0.06 | 98.4 | 94.0 | No change | 163 |
| A5 | 95.4 | 0.06 | 96.4 | 92.8 | 58 min | 175 |
| A6 | 96.7 | 0.05 | 97.0 | 93.0 | No change | 163 |
| A7 | 95.0 | 0.04 | 95.3 | 90.6 | No change | 168 |
| A8 | 92.5 | 0.07 | 89.1 | 82.5 | 52 min | 175 |
| A9 | 80.5 | 0.13 | 78.9 | 52.7 | 41 min | 182 |

From the results in Table 2, examples A1-A8 exhibited better capacity maintenance rates, less thickness variations, higher discharge rates, and generally better thermal performance including lower maximum surface temperatures than reference A9. Accordingly, the cathode materials and methods of manufacturing same according to the presently disclosed embodiments can provide lithium secondary batteries with enhanced thermal properties, large current charge / discharge cycling capabilities and safety performance.

From the results above, the cathode materials and methods of manufacturing same according to the presently disclosed embodiments can provide lithium secondary batteries with not only enhanced capacity and capacity maintenance rates, but also enhanced current charge / discharge cycle performance, safety performance and high temperature storage performance.

**Claims**

1. A cathode material for lithium batteries comprising:

   a first active component comprising one or more salts of lithium metal phosphate having the general formula $Li_{1+X}M_YPO_4$, wherein:

$$-0.1 \leq X \leq 0.2, \quad 0.9 \leq Y \leq 1.1;$$

M includes one or more members of iron, titanium, cobalt, chromium, nickel, vanadium and manganese;
a binder component; and
a second active component, wherein the second active component is formed in that one or more salt(s) of lithium metal phosphate encapsulate(s) one or more lithium transition metal oxide(s).

2. The cathode material according to claim 1, wherein the lithium metal phosphate salt has an average particle size of 1 to 10 microns.

3. The cathode material according to claim 1, wherein the lithium transition metal oxide has the general formula $Li_{1+X}Ni_{1-Y-Z}Mn_YCo_ZM_PO_2$, wherein:

   $-0.1 \leq X \leq 0.2$, $0 \leq Y \leq 1$, $0 \leq Z \leq 1$, $0 \leq Y+Z \leq 1.0$, $0 \leq P \leq 0.2$; and
   M includes one or more members of boron, magnesium, aluminum, titanium, chromium, iron, zirconium, copper, zinc, gallium, yttrium, fluorine, iodine, and sulfur.

4. The cathode material according to claim 1, wherein the lithium transition metal oxide has the general formula $Li_{1+X}Mn_YM_{2-Y}O_4$, wherein:

$$-0.1 \leq X \leq 0.2, \quad 1.7 \leq Y \leq 2.0;$$

   and
   M includes one or more members of boron, magnesium, aluminum, titanium, chromium, iron, cobalt, zirconium, nickel, copper, zinc, gallium, yttrium, fluorine, iodine, sulfur and other elements.

5. The cathode material according to claim 1, wherein the second active component has an average particle size of 5-14 microns.

6. The cathode material according to claim 1, wherein the first and second compounds include one or more members selected from the group including $LiFePO_4$, $LiCoO_2$ and $LiMn_2O_4$.

7. The cathode material according to claim 1, wherein the binder component includes one or more members of polyvinylidene fluoride (PVDF), polytetrafluoroethylene (PTFE) and styrene-butadiene rubber (SBR).

8. The cathode material according to claim 1, further comprising at least one conductive additive.

9. The cathode material according to claim 8, wherein the conductive additive includes one or more members of graphite, carbon fiber, carbon black, metal powders and fibers.

10. A battery comprising a cathode, an anode and an electrolyte, said cathode further comprising the material according to any one of claims 1-9.

**Patentansprüche**

1. Kathodenmaterial für Lithiumbatterien, umfassend:

   eine erste aktive Komponente, die ein oder mehr Lithium-Metall-Phosphat-Salze der allgemeinen Formel $Li_{1+X}M_YPO_4$ umfasst, worin:

$$-0{,}1 \leq X \leq 0{,}2 \text{ und } 0{,}9 \leq Y \leq 1{,}1$$

   ist; und

M einen oder mehrere Vertreter von Eisen, Titan, Kobalt, Chrom, Nickel, Vanadium und Mangan einschließt;
eine Bindemittelkomponente; und
eine zweite aktive Komponente, wobei die zweite aktive Komponente gebildet wurde, indem ein oder mehrere Lithium-Übergangsmetall-Oxid(e) mit einem oder mehreren Lithium-Metall-Phosphat-Salzen eingekapselt wurden.

2. Kathodenmaterial gemäß Anspruch 1, worin das Lithium-Metall-Phosphat-Salz eine mittlere Partikelgröße von 1 bis 10 $\mu$m aufweist.

3. Kathodenmaterial gemäß Anspruch 1, worin das Lithium-Übergangsmetall-Oxid die allgemeine Formel $Li_{1+X}Ni_{1-Y-Z}Mn_YCo_ZM_PO_2$ aufweist, worin:

$-0,1 \leq X \leq 0,2, 0 \leq Y \leq 1, 0 \leq Z \leq 1, 0 \leq Y+Z \leq 1,0$ und $0 \leq P \leq 0,2$ ist; und
M einen oder mehrere Vertreter von Bor, Magnesium, Aluminium, Titan, Chrom, Eisen, Zirkonium, Kupfer, Zink, Gallium, Yttrium, Fluor, Iod und Schwefel einschließt.

4. Kathodenmaterial gemäß Anspruch 1, worin das Lithium-Übergangsmetall-Oxid die allgemeine Formel $Li_{1+X}Mn_YM_{2-Y}O_4$ aufweist, worin:

$-0,1 \leq X \leq 0,2$ und $1,7 \leq Y \leq 2,0$ ist; und
M einen oder mehrere Vertreter von Bor, Magnesium, Aluminium, Titan, Chrom, Eisen, Kobalt, Zirkonium, Nickel, Kupfer, Zink, Gallium, Yttrium, Fluor, Iod, Schwefel und andere Elemente einschließt.

5. Kathodenmaterial gemäß Anspruch 1, worin die zweite aktive Komponente eine mittlere Partikelgröße von 8 bis 14 $\mu$m aufweist.

6. Kathodenmaterial gemäß Anspruch 1, worin die erste und zweite Komponente einen oder mehrere Vertreter einschließen, die aus der Gruppe, enthaltend $LiFePO_4$, $LiCoO_2$ und $LiMn_2O_4$, ausgewählt sind.

7. Kathodenmaterial gemäß Anspruch 1, worin die Bindemittelkomponente einen oder mehrere Vertreter von Polyvinylidenfluorid (PVDF), Polytetrafluorethylen (PTFE) und Styrol-Butadien-Gummi (styrene-butadiene rubber, SBR) einschließt.

8. Kathodenmaterial gemäß Anspruch 1, zusätzlich umfassend zumindest ein leitendes Additiv.

9. Kathodenmaterial gemäß Anspruch 8, worin das leitende Additiv einen oder mehrere Vertreter von Graphit, Carbonfasern, Ruß, Metallpulvern und Metallfasern einschließt.

10. Batterie, umfassend eine Kathode, eine Anode und einen Elektrolyt, wobei die Kathode zusätzlich das Material gemäß einem der Ansprüche 1 bis 9 umfasst.


**Revendications**

1. Matériau de cathode pour des batteries au lithium comprenant :

un premier composant actif comprenant un ou plusieurs sel(s) de phosphate de lithium-métal ayant la formule générale $Li_{1+X}M_YPO_4$, dans laquelle :

$$-0,1 \leq X \leq 0,2, \ 0,9 \leq Y \leq 1,1 \ ;$$

et
M inclut un ou plusieurs éléments parmi le fer, le titane, le cobalt, le chrome, le nickel, le vanadium et le manganèse ;
un composant de liaison ; et
un deuxième composant actif, dans lequel le deuxième composant actif est formé de telle manière qu'un ou plusieurs sel(s) de phosphate de lithium-métal encapsule(nt) un ou plusieurs oxyde(s) de lithium-métal de transition.

2. Matériau de cathode selon la revendication 1, dans lequel le sel de phosphate de lithium-métal a une taille moyenne de particules de 1 à 10 micromètres.

3. Matériau de cathode selon la revendication 1, dans lequel l'oxyde de lithium-métal de transition a la formule générale $Li_{1+X}Ni_{1-Y-Z}Mn_YCo_ZM_PO_2$, dans laquelle :

   $-0,1 \leq X \leq 0,2, 0 \leq Y \leq 1, 0 \leq Z \leq 1, 0 \leq Y+Z \leq 1,0, 0 \leq P \leq 0, 2$ ; et
   M inclut un ou plusieurs éléments parmi le bore, le magnésium, l'aluminium, le titane, le chrome, le fer, le zirconium, le cuivre, le zinc, le gallium, l'yttrium, le fluor, l'iode, et le soufre.

4. Matériau de cathode selon la revendication 1, dans lequel l'oxyde de lithium-métal de transition a la formule générale $Li_{1+X}Mn_YM_{2-Y}O_4$, dans laquelle :

$$-0,1 \leq X \leq 0,2, 1,7 \leq Y \leq 2,0 ;$$

   et
   M inclut un ou plusieurs éléments parmi le bore, le magnésium, l'aluminium, le titane, le chrome, le fer, le cobalt, le zirconium, le nickel, le cuivre, le zinc, le gallium, l'yttrium, le fluor, l'iode, le soufre et autres éléments.

5. Matériau de cathode selon la revendication 1, dans lequel le deuxième composant actif a une taille moyenne de particules de 5-14 micromètres.

6. Matériau de cathode selon la revendication 1, dans lequel les premier et deuxième composés incluent un ou plusieurs élément(s) choisi(s) parmi le groupe incluant $LiFePO_4$, $LiCoO_2$ et $LiMn_2O_4$.

7. Matériau de cathode selon la revendication 1, dans lequel le composant de liaison inclut un ou plusieurs élément(s) parmi un poly(fluorure de vinylidène) (PVDF), un polytétrafluoroéthylène (PTFE) et un caoutchouc de styrène-butadiène (SBR).

8. Matériau de cathode selon la revendication 1, comprenant en outre au moins un additif conducteur.

9. Matériau de cathode selon la revendication 8, dans lequel l'additif conducteur inclut un ou plusieurs élément(s) parmi un graphite, une fibre de carbone, un noir de carbone, des poudres et des fibres métalliques.

10. Batterie comprenant une cathode, une anode et un électrolyte, ladite cathode comprenant en outre le matériau selon l'une quelconque des revendications 1 à 9.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040029011 A
- US 20040096743 A
- EP 1150368 A2
- CN 1992397 A